# EUROPEAN PATENT SPECIFICATION

(11) **EP 2 251 192 B1**
(45) Date of publication and mention of the grant of the patent: **20.11.2013**
(21) Application number: 10158112.2
(22) Date of filing: 29.03.2010
(51) Int. Cl.: B32B 25/08, B32B 1/08, F16L 11/118, F16L 11/127, F16L 11/08

(54) **An improved flexible hose for conveying fluid materials and electric current**
Verbesserter Schlauch zur Lieferung von flüssigen Materialien und elektrischem Strom
Tuyau flexible amélioré pour le transport de matériaux fluides et du courant électrique

(30) Priority: 15.05.2009 IT MI20090847
(43) Date of publication of application: 17.11.2010
(73) Proprietor: IVG Colbachini S.p.A., 35030 Cervarese Santa Croce (PD) (IT)
(72) Inventor: Colbachini, Giuseppe Aldinio, I-35030, Cervarese Santa Croce (PD) (IT)
(74) Representative: Cicogna, Franco

(56) References cited:
- EP-A1- 1 650 018
- EP-A1- 1 881 250
- EP-A2- 0 821 077
- EP-A2- 1 101 994
- WO-A1-2007/042736
- FR-A1- 2 911 380
- GB-A- 2 403 995
- US-A1- 2004 071 908
- US-A1- 2005 053 742
- US-A1- 2005 170 121
- US-A1- 2006 060 004
- US-A1- 2009 091 337

## Description

### BACKGROUND OF THE INVENTION

The present invention relates to an improved flexible hose, designed for conveying fluid materials and electric current.

The field of the invention is that of flexible hoses used both for conveying fluid materials in general such as gas, liquid, powder materials, and for conveying electric current.

As is known, flexible hoses are moreover also used for exchanging data between connection points of said flexible hose.

To that end, is also known to provide tubes or hoses including, in their structure, electric cables. Example of these prior approaches may be found in documents US 5 416 270 and US 4 693 324.

The above mentioned prior art, however, has the drawback of introducing in the tube an outer element which cannot be considered as congruent with the tube or hose layered construction, which element, more specifically, consists of the cable structures embedded in the hose wall forming material.

Accordingly, this prior hose or tube has a volume much larger than that required for transporting the fluid materials and, moreover, a smaller flexibility and a larger weight than those required for the above mentioned fluid material and current conveying applications.

US 2006/0060004 A1 discloses a tubing provided with an inner layer formed of a host material that is impregnated with a carbon-based material, preferably carbon nanotubes.

### SUMMARY OF THE INVENTION

Accordingly, the aim of the present invention is to provide a flexible hose for conveying both fluid materials and an electric current which, with respect to like prior flexible hoses, has a much more simple construction, very similar to that of a flexible hose or tube for conveying only fluid materials.

The above aim, as well as other objects, which will become more apparent hereinafter, are achieved by a flexible hose according to claim 1.

Preferred embodiments of the inventive flexible hoses are defined in the dependent claims.

With respect to prior flexible hoses also allowing to convey electric signals, the inventive flexible hose provides the advantages that it does not include cables for said electric signals, thereby preserving optimum characteristics and qualities as conventionally required in flexible hoses for conveying fluid materials.

Moreover, the flexible hose according to the present invention allows to dissipate electrostatic charges accumulating on the hose walls as some materials are conveyed therethrough.

### BRIEF DESCRIPTION OF THE DRAWINGS

The above mentioned aim, as well as yet other objects, advantages and characteristics of the present invention will become more apparent hereinafter from the following detailed disclosure of a preferred embodiment of the inventive flexible hose which is illustrated, by way of an indicative, but not limitative, example in the accompanying drawings, where:
Figure 1 is a broken away view of an embodiment of the flexible hose according to the present invention;
Figure 2 shows a first modified embodiment of the flexible hose shown in figure 1, being provided with an inner reinforcement coil arrangement;
Figure 3 shows a second modified embodiment of the flexible hose shown in figure 1, with an inner reinforcement coil arrangement and a corrugated outer layer;
Figure 4 shows a third modified embodiment of the flexible hose of figure 1, further including a low surface electric resistance outer sheath;
   and
Figure 5 shows yet another modified embodiment of the flexible hose of figure 1, in which a low surface electric resistance layer is embedded in the wall of the hose.

### DESCRIPTION OF THE PREFERRED EMBODIMENTS

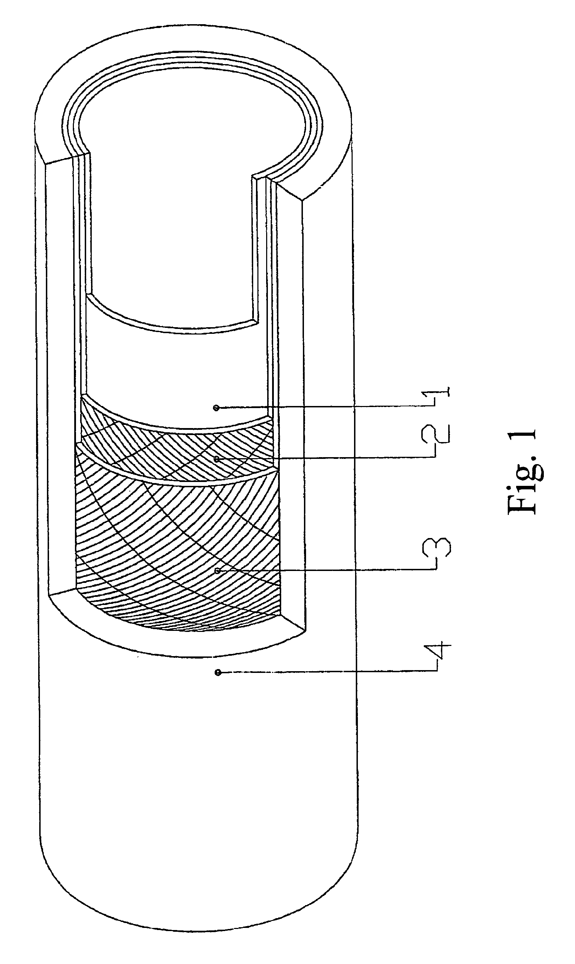

The flexible hose shown in figure 1 is of a type conventionally used for conveying fluid materials in general, both in a solid, liquid and gaseous status, in particular chemical or fuel products.

According to the present invention, the inventive flexible hose comprise a smooth flexible and clear plastics material layer 1, which has a low surface electric resistance.

More specifically, the plastics material forming said inner layer 1 comprises a flexible and clear plastics material, on which a thin film constituted by carbon nanotubes CNT is coated.

To provide a desired electric conductivity value, the thin film layer is firmly anchored to the polymeric material forming said layer 1, said nanotubes being only partially embedded in the thickness of the said layer 1.

Thus, the CNT formed film will preserve its surface electric conductivity properties, while being firmly anchored to its respective polymeric support 1.

Moreover, since said CNT film has good electric conductivity, clearness and flexibility properties, those same properties will be transferred to and preserved on the mentioned layer 1 of the inventive hose, which is per se made by a flexible and clear plastics material.

More specifically, the starting plastics material used for making the layer 1 of the inventive hose comprise a flexible and clear plastics material, in particular a thermoplastic polymer selected, preferably though not exclusively, from polyethylene, polypropylene, polybutadiene, polyamide 6,6, polyvinylchloride, polyacrylonitrylbutadienestyrene (ABS), or fluorinated polymers, such as polytetrafluoroethylene (Teflon), a terpolymer of tetrafluoroethylene, hexafluoropropylene and vinylidene fluoride (THV), a copolymer of tetrafluoroethylene and perfluoroalkylvinylether (PFA) or a tetrafluoroethylene perfluoroethylvinyl-ester (MFA) copolymer and a 1-propene, 1,1,2,3,3,3-hexafluoropolymer with tetrafluoroethene (polyfluoroethylene-propylene, FEP).

The single and multiple wall carbon nanotubes used by the invention have been synthetized at the start of 1990.

They comprise a novel form of nanostructured material (the single wall nanotubes having for example a diameter of the order of a nanometer and a length of the order of micrometers) based on carbon, having mechanical, strength and flexibility, and electric conductive properties which could be never found in any prior materials.

The CNT's suitable for the invention are both single wall carbon nanotubes SWNT, carbon double wall nanotubes DWNT, and carbon multiwall nanotubes MWNT.

In general, the plastics material used for forming the flexible hose of the invention has a surface electric resistance or resistivity less than 10¹³ kΩ/sq. In an example of a FEP layer thereon are coated a CNT film according to the present invention, it has a surface electric resistance or resistivity not larger than 10² kΩ/sq, in particular a surface electric resistance from 1 to 100 kΩ/sq.

On the above inner layer 1 of the flexible hose shown in figure 1, are moreover wound two reinforcement material layers 2 and 3, for example of a fabric material. Finally, an elastomeric material layer 4 is applied on the reinforcement layer 3.

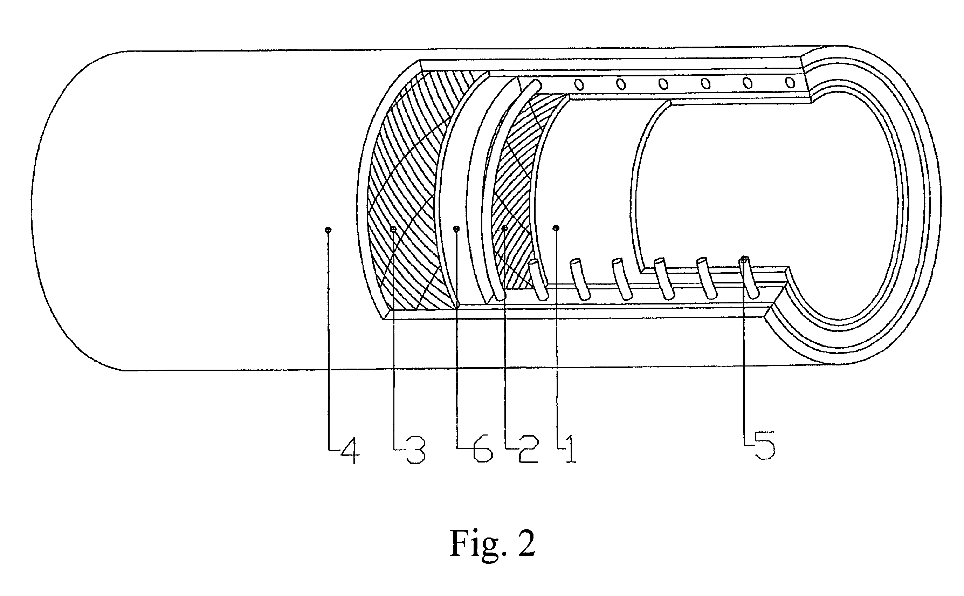

In the modified embodiment shown in figure 2, the flexible hose construction of figure 1 further comprises a reinforcement inner coil 5 made of a metal or synthetic or plastics material, in turn embedded in a thickness 6 of an elastomeric material.

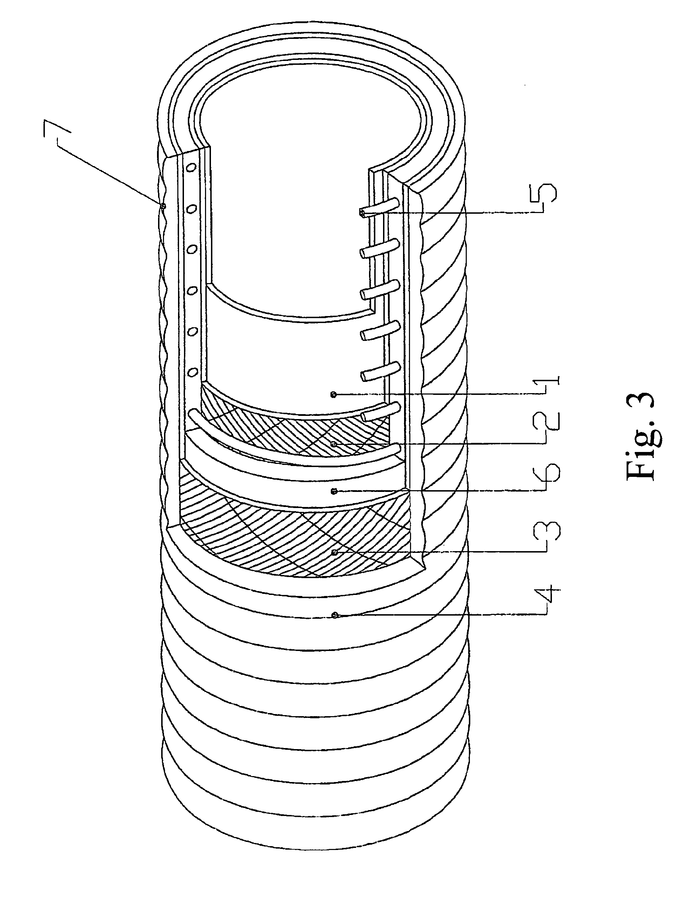

In the modified embodiment shown in figure 3, the flexible hose construction of figure 2 comprises a built-in outer layer 4 having a corrugated arrangement 7.

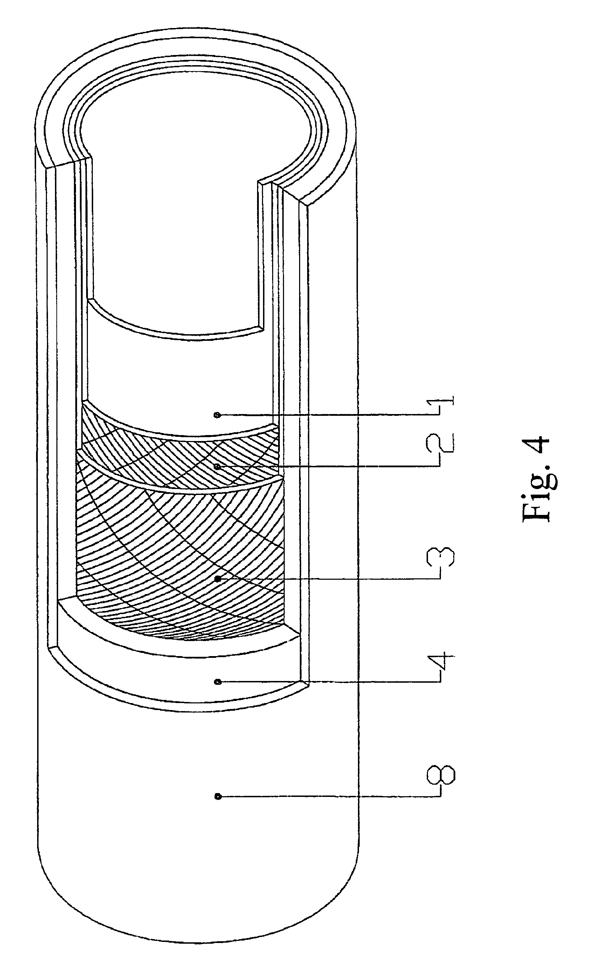

In the embodiment shown in figure 4, the flexible hose construction of figure 1 comprises a built-in low surface electric resistance outer layer 8, made of the same material as that forming the inner layer 1 and arranged on the top of the elastomeric material 4.

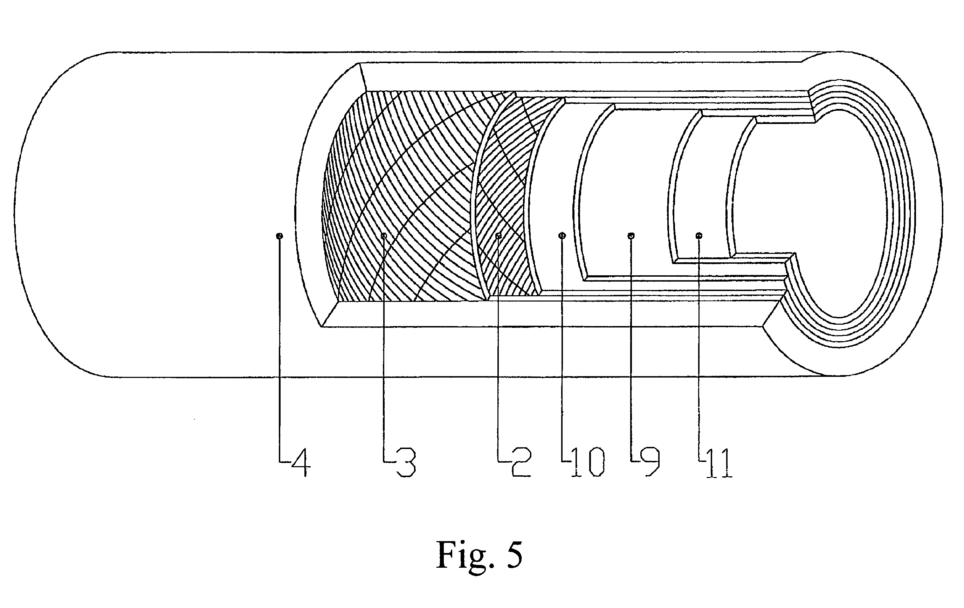

In the modified embodiment shown in figure 5, the inventive flexible hose comprises a low surface electric resistance or resistivity layer 9, analogous to the layer 1 of the hose of figure 1, but arranged between two elastomeric material layers 10 and 11.

Thus, said low surface electric resistance layer 9 is arranged inside the hose wall construction.

The invention, as disclosed and illustrated, is susceptible to several modifications for providing yet other modified embodiments not included among the above disclosed embodiments, but included within the scope of the accompanying claims.

Thus, for example, the flexible hoses shown in figures 1 and 3 could also comprise both the outer layer 8 of the hose of figure 4 and the layer 9 of the hose of figure 5.

Advantageously, said low surface electric resistance material inner 1 and outer 8 layers are also suitable for dissipating electrostatic charges accumulating on the hose as some fluid materials are conveyed therethrough.

In turn, the low surface electric resistance layer 9, embedded in the hose wall, is also very efficient for conveying electric signals.

## Claims

1. A flexible hose of the type consisting of overlapping material layers, said flexible hose comprising at least **one** layer (1,8,9) of plastic material, having anchored thereon an electric conductive, clear and flexible carbon film including a plurality of nanotubes, said carbon film **having a low surface electric resistance,** wherein said nanotubes are only partially embedded in the thickness of said at least one layer (1,8,9) and **whereby said layer (1,8,9) of plastic material has a low surface electric resistance of less than 10² kΩ/sq.**

2. A flexible hose, according to claim 1, **characterized in that** said plastics material is a flexible and clear plastics material.

3. A flexible hose, according to claim 2, **characterized in that** said plastics material itself has a surface electric resistance less than 10¹³ kΩ/sq.

4. A flexible hose, according to claim 3, **characterized in that** said plastics material comprises a thermoplastic polymer selected from polyethylene, polypropylene, polybutadiene, polyamide 6.6, polyvinylchloride, polyacrylonitrylebutadienestyrene (ABS) or a fluorine polymer.

5. A flexible hose, according to claim 4, **characterized in that** said fluorine polymer comprises polytetrafluoroethylene (Teflon), a terpolymer of tetrafluoroethylene, hexafluoropropylene and vinylidene fluoride (THV), a copolymer of tetrafluoroethylene and perfluoroalkylvinylether (PFA) or a copolymer of tetrafluoroethylene perfluoroethylvinyl- ester (MFA).

6. A flexible hose, according to claim 5, **characterized in that** said fluoridized polymer comprises 1-propene, a 1,1,2,3,3,3-hexafluoropolymer with tetrafluoroethene (polyfluoroethylene-propylene, FEP).

7. A flexible hose, according to claim 3, **characterized in that** said carbon nanotubes are single wall nanotubes (SWNT), double wall nanotubes (DWNT) or multi wall nanotubes (MWNT).

8. A flexible hose, according to claim 1, **characterized in that** said low surface electric resistance plastics material layer (1) constitutes the innermost layer of said tube.

9. A flexible hose, according to claim 1, **characterized in that** said low surface electric resistance plastics material layer (8) constitutes the outer layer of said tube.

10. A flexible hose, according to claim 1, **characterized in that** said low electric resistance plastics material layer (9) is arranged inside the structure forming the wall of said tube.

11. A flexible hose, according to claim 10, **characterized in that** said layer (9) is arranged between elastomeric material layers (10,11).

12. A flexible hose, according to claim 8, **characterized in that** said hose comprises moreover a reinforcement inner coil (5) embedded in an elastomeric material layer (6).

13. A flexible hose, according to claim 8, **characterized in that** said flexible hose is a corrugated flexible hose.

## Patentansprüche

1. Schlauch von der Art, die aus sich überlappenden Materialschichten besteht, wobei der Schlauch mindestens eine Schicht (1, 8, 9) aus Kunststoff umfasst, die darauf verankert eine elektrisch leitfähige, farblose und biegsame dünne Kohlenstoffschicht aufweist, die mehrere Nanoröhrchen umfasst, wobei die dünne Kohlenstoffschicht einen niedrigen elektrischen Oberflächenwiderstand aufweist, wobei die Nanoröhrchen nur teilweise in der Dicke der mindestens einen Schicht (1, 8, 9) eingebettet sind und wobei die Schicht (1, 8, 9) aus Kunststoffmaterial einen niedrigen elektrischen Oberflächenwiderstand von weniger als 10² kΩ/sq aufweist.

2. Schlauch nach Anspruch 1, **dadurch gekennzeichnet, dass** der Kunststoff ein biegsamer und farbloser Kunststoff ist..

3. Schlauch nach Anspruch 2, **dadurch gekennzeichnet, dass** der Kunststoff selbst einen elektrischen Oberflächenwiderstand von weniger als 10¹³ kΩ/sq aufweist.

4. Schlauch nach Anspruch 3, **dadurch gekennzeichnet, dass** der Kunststoff ein thermoplastisches Polymer umfasst, das von Polyethylen, Polypropylen, Polybutadien, Polyamid 6.6, Polyvinylchlorid, Polyacrylnitril-Butadien-Styrol (ABS) oder einem Fluorpolymer ausgewählt ist.

5. Schlauch nach Anspruch 4, **dadurch gekennzeichnet, dass** das Fluorpolymer Polytetrafluorethylen (Teflon), ein Terpolymer von Tetrafluorethylen, Hexafluorpropylen und Vinylidenfluorid (THV), ein Copolymer von Tetrafluorethylen und Perfluoralkylvinylether (PFA) oder ein Copolymer von Tetrafluorethylen-Perfluorethylvinyl-Ester (MFA) ist.

6. Schlauch nach Anspruch 5, **dadurch gekennzeichnet, dass** das fluorierte Polymer 1-Propen, ein 1,1,2,3,3,3-Hexafluorpolymer mit Tetrafluorethen (Polyfluorethylen-Propylen, FEP) umfasst.

7. Schlauch nach Anspruch 3, **dadurch gekennzeichnet, dass** die Kohlenstoff-Nanoröhrchen einwandige Nanoröhrchen (Single Wall Nanotube - SWNT), doppelwandige Nanoröhrchen (Double Wall Nanotube - DWNT) oder mehrwandige Nanoröhrchen (Multi Wall Nanotube - MWNT) sind.

8. Schlauch nach Anspruch 1, **dadurch gekennzeichnet, dass** die Schicht (1) aus Kunststoff mit niedriger elektrischer Oberflächenspannung die innerste Schicht des Röhrchens bildet.

9. Schlauch nach Anspruch 1, **dadurch gekennzeichnet, dass** die Schicht (8) aus Kunststoff mit niedriger elektrischer Oberflächenspannung die Außenschicht des Röhrchens bildet.

10. Schlauch nach Anspruch 1, **dadurch gekennzeichnet, dass** die Schicht (9) aus Kunststoffmaterial mit niedriger elektrischer Oberflächenspannung innerhalb der Struktur angeordnet ist, die die Wand des Röhrchens bildet.

11. Schlauch nach Anspruch 10, **dadurch gekennzeichnet, dass** die Schicht (9) zwischen Schichten (10, 11) aus Elastomermaterial angeordnet ist.

12. Schlauch nach Anspruch 8, **dadurch gekennzeichnet, dass** der Schlauch ferner eine innere Verstärkungsspule (5) umfasst, die in einer Schicht (6) aus Elastomermaterial eingebettet ist.

13. Schlauch nach Anspruch 8, **dadurch gekennzeichnet, dass** der Schlauch ein Wellschlauch ist.

## Revendications

1. Tuyau flexible du type consistant en couches de matériau superposées, ledit tuyau flexible comprenant au moins une couche (1, 8, 9) de matière plastique, sur laquelle est ancré un film de carbone souple, transparent et conducteur électriquement incluant une pluralité de nanotubes, ledit film de carbone ayant une résistance électrique de surface faible, dans lequel lesdits nanotubes ne sont que partiellement noyés dans l'épaisseur de ladite au moins une couche (1, 8, 9) et grâce auquel ladite couche (1, 8, 9) de matière plastique a une résistance électrique de surface faible, inférieure à 10² kΩ/sq.

2. Tuyau flexible selon la revendication 1, **caractérisé en ce que** ladite matière plastique est une matière plastique souple et transparente.

3. Tuyau flexible selon la revendication 2, **caractérisé en ce que** ladite matière plastique elle-même a une résistance électrique de surface inférieure à 10¹³ kΩ/sq.

4. Tuyau flexible selon la revendication 3, **caractérisé en ce que** ladite matière plastique comprend un polymère thermoplastique choisi parmi le polyéthylène, le polypropylène, le polybutadiène, le polyamide 6.6, le polychlorure de vinyle, le polyacrylonitrile-butadiène-styrène (ABS) ou un polymère fluoré.

5. Tuyau flexible selon la revendication 4, **caractérisé en ce que** ledit polymère fluoré comprend du polytétrafluoréthylène (Teflon), un terpolymère de tétrafluoréthylène, de fluorure de vinylidène et d'hexafluoropropylène (THV), un copolymère de tétrafluoréthylène et de perfluoro alkyl vinyl ether (PFA) ou un copolymère d'ester perfluoroéthylvinylique de tétrafluoréthylène (MFA).

6. Tuyau flexible selon la revendication 5, **caractérisé en ce que** ledit polymère fluoré comprend du propène 1, un polymère d'hexafluoro-1,1,2,3,3,3 avec du tétrafluoréthylène (polyfluoréthylène-propylène, FEP).

7. Tuyau flexible selon la revendication 3, **caractérisé en ce que** lesdits nanotubes en carbone sont des nanotubes à paroi unique (SWNT), des nanotubes à double paroi (DWNT) ou des nanotubes à parois multiples (MWNT).

8. Tuyau flexible selon la revendication 1, **caractérisé en ce que** ladite couche de matière plastique à faible résistance électrique de surface (1) constitue la couche située le plus à l'intérieur dudit tube.

9. Tuyau flexible selon la revendication 1, **caractérisé en ce que** ladite couche de matière plastique à faible résistance électrique de surface (8) constitue la couche externe dudit tube.

10. Tuyau flexible selon la revendication 1, **caractérisé en ce que** ladite couche de matière plastique à faible résistance électrique (9) est agencée à l'intérieur de la structure formant la paroi dudit tube..

11. Tuyau flexible selon la revendication 10, **caractérisé en ce que** ladite couche (9) est agencée entre des couches de matériau élastomère (10, 11).

12. Tuyau flexible selon la revendication 8, **caractérisé en ce que** ledit tuyau flexible comprend de plus un enroulement interne de renforcement (5) noyé dans une couche de matériau élastomère (6).

13. Tuyau flexible selon la revendication 8, **caractérisé en ce que** ledit tuyau flexible est un tuyau flexible annelé souple.
